# EUROPEAN PATENT APPLICATION

(11) **EP 4 641 713 A1**
(43) Date of publication of application: **29.10.2025**
(21) Application number: 24172702.3
(22) Date of filing: 26.04.2024
(51) Int. Cl.: H01M 8/04, H01M 8/1226, H01M 8/1231, H01M 8/1246, H01M 8/1253, H01M 8/2428, H01M 8/2457, H01M 8/12

(54) **SOLID OXIDE FUEL CELL DEVICE FORMED AS A FUEL CELL NETWORK, AND AIRCRAFT**

(71) Applicant: AIRBUS Operations GmbH, 21129 Hamburg (DE)
(72) Inventor: Geisler, Helge Ingolf, 21129 Hamburg (DE); Nehter, Pedro, 21129 Hamburg (DE)

(57) **Abstract**

A Solid Oxide Fuel Cell (SOFC-) device (10; 11) comprises an arrangement (12) of several solid oxide fuel cell (SOFC-) elements (14) which are electrically connected in series to form a fuel cell network (15). Each SOFC-element (14) comprises an oxide conducting electrolyte layer (16) arranged between a first electrode layer (18) on one side and a second electrode layer (20) on the other side. A gas permeable metallic support structure (22) supports the arrangement (12) of SOFC-elements (14) and forms a channel for (32) conducting a fuel gas (F) along the SOFC-elements (14) on the side of the first electrode layer. An electrically non-conductive layer (24) is provided between the metallic support structure and the arrangement of SOFC-elements (14), or at least a partial area of the metallic support structure (22) has a suppressed or no electrical conductivity. The SOFC-device (10; 11) is e.g. formed as a tube or as a plate comprising one or more channels (32).

## Description

The invention relates to a solid oxide fuel cell device which is formed as a network of single solid oxide fuel cells. Further, the invention relates to an aircraft that comprises such a solid oxide fuel cell device.

The solid oxygen fuel cell device or SOFC device according to the invention is in particular applicable in aeronautics. However, it may be applied in other mobile systems or portable applications as well.

Solid Oxide Fuel Cells (SOFCs) were originally developed for stationary applications. They have a much higher electrical efficiency than other types of fuel cells, like e.g. direct methanol fuel cells, low temperature proton exchange membrane fuel cells, or high temperature proton exchange fuel cells.

The main components of typical planar SOFC stacks are the cells and interconnector plates which connect multiple planar cells electrically in series to achieve practical usable voltages and furthermore to separate the fuel and oxidant while supplying gas transport pathways.

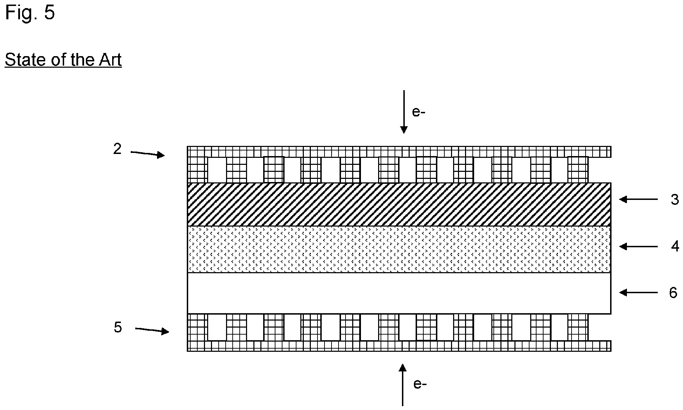

As shown in **Fig. 5****,** which shows a planar solid oxide fluid cell according to the state of the art. The cell consists of an oxide conducting ceramic electrolyte 4, covered with a negative electrode 6 forming an anode on the fuel side, and a positive electrode 3 which forms a cathode on the air side. Metallic interconnector plates 2, 5 are used to electrically connect each cell of the stack to its neighbour cell and furthermore to separate the fuel from the air gas channel of two neighbouring cells. The electrical current is hereby transferred in a perpendicular direction to the cell area.

A major disadvantage of the known SOFCs, in particular for use in aviation, is their low gravimetric power density, i.e. the power delivered per weight.

Other known SOFC concepts make use of a current collection in the longitudinal, i.e. axial, or circular direction of the cell along the in-plane cross section of the electrodes, which cause higher current collection losses due to the limited in-plane conductivity in the thin porous electrode layers compared to the planar concept with interconnector plates.

The problem of current collection losses is generally known since the first commercially available tubular cells had a poor power density partly because of the long distances the electrons have to pass in the circular direction. Even though the travel distances of the electrons were reduced by choosing a circular instead of a longitudinal current collection, the ohmic losses were still high. Another disadvantage of this concept is that the outer stack compartment would be filled with fuel gas like hydrogen e.g. which could create an explosive mixture in case of leakages between the stack compartment and the environment.

Another prior art uses a porous ceramic support with integrated fuel channels, whereas the outer area is coated with active anode-, electrolyte-, and cathode layers and integrated interconnectors to realize an electrical serial connection of single cell segments. The ceramic support is electrically insulating which is mandatory to avoid short cuts or creep currents between the cell segments. Nevertheless, the ceramic support is from its nature fragile with a limited mechanical and thermal shock resistivity.

It is the object of the invention to provide a solid oxide fuel cell device with a greatly increased gravimetric power density, in particular for use in aircrafts.

According to a first aspect, the invention provides a Solid Oxide Fuel Cell device comprising an arrangement of several solid oxide fuel cell (SOFC-) elements which are electrically connected in series to form a fuel cell network, wherein each SOFC-element comprises an oxide conducting electrolyte layer arranged between a first electrode layer on one side and a second electrode layer on the other side; and a gas permeable metallic support structure supporting the arrangement of SOFC-elements and forming a channel for conducting a fuel gas along the SOFC-elements on the side of the first electrode layer; wherein an electrically non-conductive layer is provided between the metallic support structure and the arrangement of SOFC-elements, and/or at least a partial area of the metallic support structure has a suppressed or no electrical conductivity.

The invention provides a solid oxide fuel cell device having a very high electrical efficiency and a drastically increased gravimetric power density. In particular, a gravimetric power density of 2-3 kW/kg is achieved.

Preferably, the support structure is made of amorph metal. Amorph metals are not electrically conductive or at least have a strongly reduced electric conductivity due to their inner structure which does not show a crystalline lattice.

Preferably, the SOFC-elements are provided on both sides of the metallic support structure. This results in a further increased efficiency.

Preferably, the Solid Oxide Fuel Cell device is formed as a tube, in which the SOFC-elements on both sides of the metallic support structure form segments of the tube wall.

Preferably the segments are connected in series to conduct the fuel gas within the tube wall and air within the interior of the tube. By this feature, the efficiency is still further increased

Preferably, the Solid Oxide Fuel Cell device is formed as a plate, in which the SOFC-elements on both sides of the metallic support structure form segments of the plate connected in series to conduct the fuel gas within the plate and to provide air on both sides of the plate.

Preferably, the fuel gas is conducted within one or more channels formed in the interior of the plate.

Preferably, the second electrode layer is arranged to be in contact with air.

Preferably, the Solid Oxide Fuel Cell device is made by 3-D printing. Thus, the costs of manufacturing the SOFC device are greatly reduced

Preferably, the electrically non-conductive layer or at least the partial area of the metallic support structure is made of the same material as the electrolyte layer.

This leads to a better durability, due to the fact that the coefficient of thermal expansion of the metallic support structure or its the partial area is the same as that of the electrolyte layer.

Preferably, the electrically non-conductive layer or at least the partial area of the metallic support structure is made of aluminium oxide.

Preferably, the electrically non-conductive layer or at least the partial area of the metallic support structure is made of yttria stabilized zirconia.

According to another aspect, the invention provides an aircraft comprising a solid oxide fuel cell according to the first aspect of the invention.

In particular, the invention provides means of creating an electrically isolating surface area in order to realize a Solid Oxide Fuel Cell array arranged in a series connection for lightweight applications like energy conversion of hydrogen into electrical energy for future aircraft propulsion.

For example, the invention provides a means of inhibiting electrical conductivity on a porous surface area of an electrically conductive support structure, e.g. a single metallic tube or foam, which functions as mechanical backbone or support for a Solid Oxide Fuel Cell arranged in a multiple cell array connected electrically in series, thus forming a networking concept.

In particular, the invention may comprise several concepts:
Concept A: The outer and inner surface of the tube is coated with an electrically non-conductive layer, while supplying a certain amount of open pore space for gas supply to the active SOFCs.
Concept B: The porous metallic support structure itself is manufactured in a way such that it is in certain areas electrically non-conductive in order to prevent an electrical short cut between deposited segmented electrode layers.
Concept C: The porous metallic support structure itself is manufactured in a way such that it is completely electrically non-conductive.

In particular, electrical conductivity is inhibited in order to prevent an electrical short cut on the inner and outer surface area of a tubular or flat tubular metal-backbone, where the inner volume area functions as fuel gas channel and the solid structure itself as mechanical support for multiple SOFCs arranged in a series connection.

For example, this can be applied on ceramic-metal composites like e.g. AIO-Ni, to combine the character of weight saving from the ceramic and mechanical flexibility and electrical conductivity from the metal.

The invention enables the realization of tubular metal supported SOFCs with networking concept, i.e. series interconnection of single cells, on a single metallic backbone functioning support structure.

In-plane current transport pathways in the individual single cell electrode layers can be minimized and thereby ohmic losses reduced without an increase in complexity for cell arrangement and electrical series connection in a stack arrangement.

Further, cell production is simplified because the sum of in series connected cells are applied on one surface area, thus enabling application of state of the art production processes, like e.g. dip coating.

By the invention, electrical conductivity is inhibited on the surface area of e.g. a meta foam or porous metal structure, which functions as mechanical support, and the inner volume area as a fuel gas channel for a tubular cell concept.

In this way, multiple single SOFCs can be arranged on the inner and outer surface area in an electrical series connection with optimized current transport pathways in the porous electrode layers.

The electrical series connection enables a high power output supplied by only one element due to the increased voltage while maintaining a low current.

Furthermore, complexity in a stack arrangement is reduced due to the increased power output of one single element comprising multiple SOFCs.

In the following, exemplary embodiments of the invention showing further advantages and characteristics are described in detail with reference to the figures, in which:
- **Fig.** 1: shows a perspective view of a SOFC device according to a first preferred embodiment the invention, which is formed as a tube;
- **Fig. 2**: shows an enlarged partial sectional view of the SOFC devices according to a first option;
- **Fig. 3**: shows a perspective view of a SOFC device according to second preferred embodiment of the invention, which is formed as a plate;
- **Fig. 4**: shows an enlarged partial sectional view of the SOFC devices according to a second option; and
- **Fig. 5**: shows a sectional view of a solid oxygen fuel cell according to the state of the art.

In the figures, similar or identical elements and features are designated by the same reference numbers.

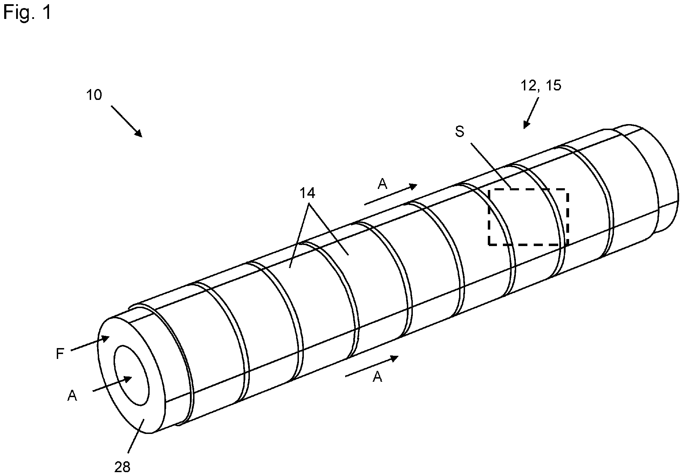

**Figs. 1** shows a Solid Oxide Fuel Cell device 10, referred to as SOFC device, according to a first preferred embodiment of the invention. The SOFC device 10 comprises an arrangement 12 of several solid oxide fuel cell elements 14 or SOFC-elements, which are electrically connected in series to form a SOFC network 15. In the embodiment shown here, the SOFC-device 10 is formed as a tube.

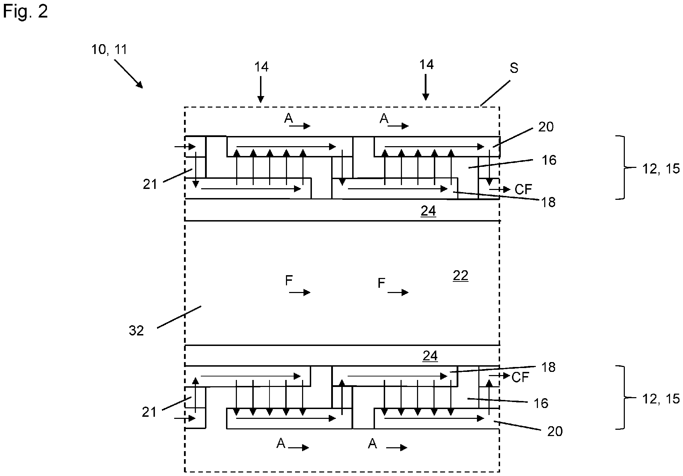

**Fig. 2** depicts an enlarged sectional view of the SOFC device 10 in section S of the SOFC device 10 shown in Fig. 1, according to a first option.

Two adjacent SOFC-elements 14 of the arrangement 12, which are connected in series, are shown. Each SOFC-element 14 comprises an oxide conducting electrolyte layer 16 arranged between a first electrode layer 18 on one side of the electrolyte layer 16 and a second electrode layer 20 on the other side of electrolyte layer 16.

The electrolyte layer 16 separates the electrode layers 18, 20 from each other. Interconnectors 21 are arranged between the electrolyte layers 16 of adjacent SOFC-elements 14.

The interconnectors 21 electrically connect the electrode layers 18, 20 of adjacent SOFC-elements to form the electrical series connection of the individual cell segments. The electrolyte 16, on the other hand, insulates the electrodes 18, 20 electrically and their respective gas spaces (fuel gas / air) from each other.

The interconnectors 21 are electrically conductive, gas-tight, chemically stable against reducing (fuel gas side) and oxidizing (air side) atmospheres. They have a thermal expansion coefficient (TEC) that is as close as possible in relation to the TECs of other functional layers, e.g. electrodes and/or support.

The geometric dimensions of the interconnectors 21 are significantly smaller than connector pates 2,5 in the prior art (see Fig. 5), and therefore the weight of the component is strongly reduced. For example, interconnectors for planar stacks cover the entire active cell surface, whereas with a tubular net SOFC cell geometry these can be designed to be much more compact in terms of volume and therefore also gravimetrically.

A gas permeable metallic support structure 22 supports the arrangement 12 of SOFC-elements 14 and forms a channel 32 for conducting a fuel gas as a fuel flow F along the SOFC-elements 14 on the side of the first electrode layer 18, which forms an anode. In particular hydrogen is used as fuel F. The support structure 22 provides a mechanical support of the SOFC-elements 14 and an inner volume area as a fuel gas channel. It is e.g. made of a metal foam and/or formed as a porous metal structure.

The second electrode layer 20 on the opposite side of the electrolyte layer 16 is configured to be in contact with an air flow A and forms a cathode. In particular, the electrode layers 18, 20 are porous.

In the embodiment shown here, the SOFC-elements 14 are provided on both sides of the metallic support structure 22. The metallic support structure 22 forms the channel 32 for conducting the fuel F.

An electrically non-conductive layer 24 is provided between the metallic support structure 22 and the first electrode layer 18 which forms the anode. Non-conductive layer 24 offers non-electronically conducting properties.

The electric current flow is indicated by reference sign CF.

As an alternative or in addition, a certain part of the material forming the metallic support structure 22, which is e.g. adjacent to the electrode layer 18, is configured in a way that its electronic conductivity is suppressed. For example, the electrically non-conductive layer 24 can be provided in this way, in particular as a part of the metallic support structure 22.

The electrically non-conductive layer 24 or at least the partial area of the metallic support structure 22 is e.g. made of aluminium oxide. It may also be made of yttria stabilized zirconia which is most preferred. Amorph metals can be used as well.

According to a particularly preferred embodiment, the electrically non-conductive layer 24 is made of the same material as that of the electrolyte layer 16. This has the particular advantage, that the SOFC-device 10 is extremely robust and offers exceptional durability. This is due to the fact that in this case the coefficient of thermal expansion of non-conductive layer 24 is the same as that of the electrolyte layer 16.

In this way, the multiple single SOFCs or SOFC-elements 14 are arranged on the inner and outer surface area of the SOFC device 10 in an electrical series connection with optimized current transport pathways in the porous electrode layers 18, 20. The electrical series connection of the SOFCs enables a high power output supplied by the SOFC device 10, which is formed as only one single element, due to the increased voltage while maintaining a low current.

Furthermore, complexity in a stack arrangement is reduced due to the increased power output of one single element comprising multiple SOFCs.

The SOFC-device 10 provides an electrical series connection of individual SOFCs or SOFC-elements 14 on one supporting metallic element provided by metallic support structure 22 without electrical short cuts between the individual fuel electrodes 18 of each SOFC 14. The isolation layer formed by the electrically non-conductive layer 24, which can be made ultra-thin, provides sufficient open porosity to enable fuel gas supply from the fuel flow regime to the electrochemical active sites in the porous fuel electrode substrate.

As shown in **Fig. 1****,** the SOFC device 10 according to the first preferred embodiment is formed as a tube, in which the SOFC-elements 14 on both sides of the metallic support structure 22 (see Fig. 2) form segments of the tube wall 28.

The segments are connected in series in the lengthwise direction of the tube to conduct the fuel F formed as a gas flow through the metallic support structure 22, which is formed as a ring gap in the interior of the wall 28 of the tube, in its lengthwise direction, and to conduct air A as an air flow within the interior of the tube which is surrounded by the tube wall 28. The air flow A is provided as well outside the tube wall. Thus, the active surface of the SOFC-device 10 is doubled.

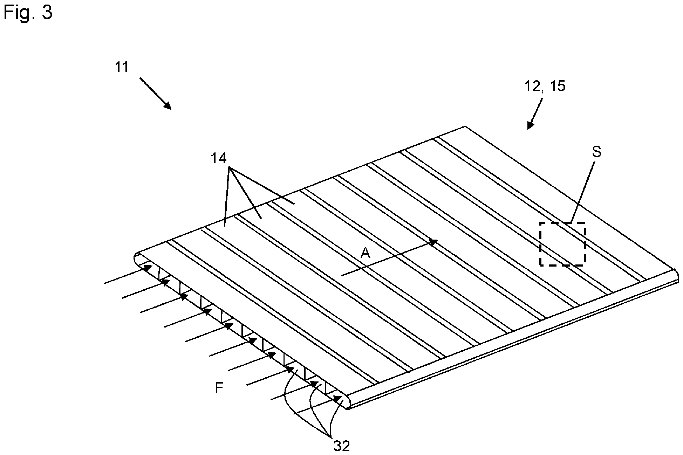

**Fig. 3** depicts a second preferred embodiment of the Solid Oxide Fuel Cell device, according to which the SOFC-device 11 is formed as a plate.

Here, the SOFC-elements 14 on both sides of the metallic support structure 22 form segments of the plate, which are connected in series to conduct the fuel flow F within one or more channels 32 formed within the plate and to provide air or air flow A on both sides of the plate. This concept is called flat tubular, i.e. a flat tubular SOFC-device 11 is provided.

All other features and characteristics are the same as described above with reference to Figs. 1 and 2.

In particular, Fig. 2 applies in the same way to the SOFC device 11 shown in Fig. 3 as to SOFC device 10 shown in Fig. 1. To avoid repetitions, reference is made to Fig. 2 and the above description.

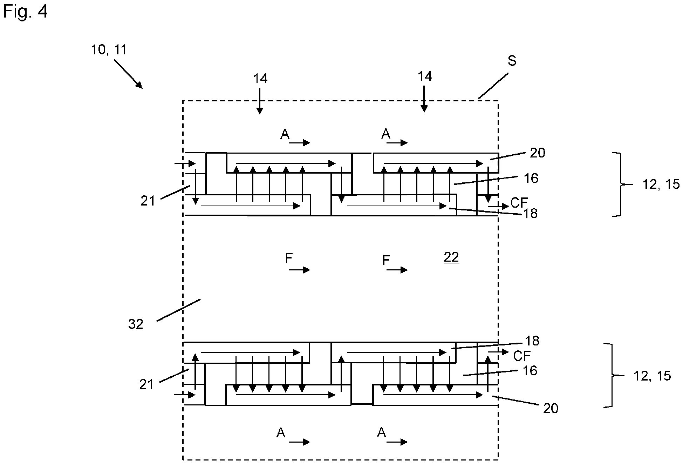

**Fig. 4** depicts an enlarged sectional view of the SOFC device 10 in section S of the SOFC device 10 shown in Fig. 1, according to a second option.

According to this embodiment, the metallic support structure 22 is made of a metal, having a suppressed electric conductivity, in particular an amorph metal is used. The electrically non-conductive layer 24 provided in the embodiment shown in Fig. 2 may therefore be omitted.

All other features and characteristics are the same as described above with reference to Fig. 2.

The embodiment shown in Fig. 4 can be realized in tubular SOFC-device 10 shown in Fig. 1 as well as the plate formed SOFC-device 11 shown in Fig. 3. To avoid repetitions, reference is made to Figs. 1 and 3 respectively, and to the above description.

The principle design of the SOFC-device 10, 11 according to this optional concept is that metallic support structure 22 itself has the property of electric isolation, i.e. it is electrically non-conductive, where the fuel is fed to the porous metal structure 22 or metal foam. The reactant air may be fed to an inner channel, e.g. if the tubular design of SOFC device 10 shown in Fig. 1 is used.

A further advantage of the various embodiments and options is, that the SOFC-device 10, 11 can be made by 3-D printing. This reduces drastically the production costs.

The invention enables high voltages but low electric currents. Further, only two electric contacts are necessary at the SOFC device. The weight is drastically reduced and a very high power density can be achieved. That makes it in particular suitable for mobile applications and in particular for aviation. In addition, the SOFC device is very robust and shock-resistant.

### List of reference numbers:

- 10, 11: Solid Oxide Fuel Cell device /SOFC device
- 12: arrangement of several solid oxide fuel cell elements
- 14: solid oxide fuel cell elements / SOFC-elements
- 15: network of SOFCs
- 16: electrolyte layer
- 18: first electrode layer
- 20: second electrode layer
- 21: interconnectors
- 22: metallic support structure
- 24: non-conductive layer
- 28: tube wall
- 32: channel

- A: air / air flow
- CF: electric current flow
- F: fuel / fuel flow
- S: section of SOFC device

## Claims

1. Solid Oxide Fuel Cell device, comprising
an arrangement (12) of several solid oxide fuel cell (SOFC-) elements (14) which are electrically connected in series to form a fuel cell network (15),
wherein each SOFC-element comprises an oxide conducting electrolyte layer (16) arranged between a first electrode layer (18) on one side and a second electrode layer (20) on the other side;
and
a gas permeable metallic support structure (22) supporting the arrangement of SOFC-elements (14) and forming a channel for (32) conducting a fuel gas (F) along the SOFC-elements (14) on the side of the first electrode layer, wherein
an electrically non-conductive layer (24) is provided between the metallic support structure and the arrangement of SOFC-elements (14), and/or
at least a partial area of the metallic support structure (22) has a suppressed or no electrical conductivity.

2. Solid Oxide Fuel Cell device according to claim 1, wherein the metallic support structure is (22) made of amorph metal.

3. Solid Oxide Fuel Cell device according to claim 1 or 2, wherein the SOFC-elements (14) are provided on both sides of the metallic support structure (22).

4. Solid Oxide Fuel Cell device according to claim 3, wherein the SOFC device (10) is formed as a tube, in which the SOFC-elements (14) on both sides of the metallic support structure (22) form segments of the tube wall (28) connected in series to conduct the fuel gas within the tube wall and air within the interior of the tube.

5. Solid Oxide Fuel Cell device according to claim 3, wherein the SOFC-device (11) is formed as a plate, in which the SOFC-elements (14) on both sides of the metallic support structure (22) form segments of the plate which are connected in series to conduct the fuel gas (F) within one or more channels (32) formed in the interior of the plate, and to be in contact with air (A) on the outer sides of the plate.

6. Solid Oxide Fuel Cell device according to one of the preceding claims,
wherein the SOFC-device (10; 11) is made by 3-D printing.

7. Solid Oxide Fuel Cell device according to one of the preceding claims,
wherein the electrically non-conductive layer (24) or at least the partial area of the metallic support structure (22) is made of the same material as the electrolyte layer (16)

8. Solid Oxide Fuel Cell device according to one of the preceding claims,
wherein the electrically non-conductive layer (24) or at least the partial area of the metallic support structure (22) is made of aluminium oxide.

9. Solid Oxide Fuel Cell device according to one of the preceding claims,
wherein the electrically non-conductive layer (24) or at least the partial area of the metallic support structure (22) is made of yttria stabilized zirconia.

10. Aircraft, comprising a solid oxide fuel cell device (10; 11) according to one of the preceding claims.
